Europäisches Patentamt

**European Patent Office**

Office européen des brevets

(19)

(11) Publication number: **0 053 590**
A2

(12)

# EUROPEAN PATENT APPLICATION

(21) Application number: **81830240.8**

(22) Date of filing: **01.12.81**

(51) Int. Cl.³: **B 29 D 23/05,** F 16 L 9/12

(30) Priority: **03.12.80 IT 2642680**

(43) Date of publication of application: **09.06.82**
**Bulletin 82/23**

(84) Designated Contracting States: **AT BE CH DE FR GB LI NL SE**

(71) Applicant: **MAZZER MATERIE PLASTICHE, Via Dante 35, Ponte Lambro Como (IT)**

(72) Inventor: **Bellora, Luigi, Via General Govone 100, I-20100 Milan (IT)**

(74) Representative: **Calvani, Domenico, UFFICIO BREVETTI ING. CALVANI, SALVI & VERONELLI 4, Piazza Duca d'Aosta, I-20124 Milan (IT)**

(54) A method for manufacturing tubes with aluminium core and capable of permanent cold deformation.

(57) In a method for manufacturing permanently cold deformable tubes, the metallic deformable core of the tube is provided with interspaces or openings which allow for an autogenous sealing of the tube outer core with the tube inner core and form a sandwich with the intermediate metallic core.

COMPLETE DOCUMENT

This invention relates to the technical field of the tubes which are cold deformable, i.e. tubes that are able to permanently (but reversibly) take a desired configuration when bent in a cold state.

Methods for manufacturing such tubes are already known and the tubes are commercially available in different embodiments, all more or less showing the drawback of having a comparatively expensive manufacturing method.

An object of this invention is to provide a method for manufacturing said permanently-reversibly cold deformable tubes, which method allows to at least substantially overcome the prior art drawbacks, while maintaining some beneficial features thereof.

According to the invention, the method of manufacturing said tubes is characterized in that after the extrusion of a first core (the inner one), a deformable aluminium core element is wound thereon, and then a second or outer core is extruded in such a manner to retain the central aluminium core, while allowing the outer core material to get sealed with the inner core material through interspaces or openings of the aluminium core.

0053590

Preferably the material used for both the inner
and outer core are identical and consist, for example,
of a product known under the trade name RILSAN (trade
mark), so that it is possible to obtain a permanently
deformable tube which can be fed even with high corrosive products, foodstuffs, petroleum products, etc., so
to widen the application range of such tubes in the field
of the pipe systems for the above products.

According to one embodiment of the invention,
said interspace is obtained by covering the surface of
the inner core with wound coils between which a clearance
is left to ensure a penetration of the extruded material
to the inner core, thereby obtaining a sealing of the
outer core with the inner one.

No restriction exists as to the winding since,
without prejudice to the idea of creating an interspace
allowing for the sealing of the outer core with the inner
one during the extrusion step (which obviously does not
necessarily imply the use of the same material for both
the outer and inner cores) the wound strips may be in
the form of a strap, or in the form of a wire. In other
words, as far as the winding is concerned, it has to be noted that the essential feature is the permanent deformability of the aluminium core, and therefore the winding can be made in the form of a strap or of a wire
without departing from the scope of the invention.

Instead of a winding, one could foresee a strip
which is bent such as to form or not a longitudinal
butt-joint. In this case, however, in order to achieve
fastening of the deformable aluminium core in an easy
manner, the aluminium strip surface should have perforations or the like to ensure a penetration of the thermoplastic material from the outer core to the inner one during the outer core extrusion step, and then an autogenous seal of the two extruded cores of thermoplastic materials.

The above and further features, as well as other
objects and advantages of the invention, will appear from
the following description of an embodiment thereof, as
shown in the accompanying drawings, wherein:

Figure 1 is a logitudinal cross-sectional view
showing the inner core after the winding step of an aluminium strap therearound;

Figure 2 is a cross-sectional view similar to that of figure 1, showing the finished tube;

Figure 3 is a view similar to that of figure 1,
showing an alternative embodiment;

Figure 4 is a cross-sectional view (similar to
that of fig.2) of the embodiment of figure 3, in which,
instead of a spiral means, an aluminium strip is provided
which can be fastened by butt-joint, and has openings or
through-holes provided therein;

Figures 5 and 6 are cross-sectional views showing
two successive steps for tightly sealing two permanently
deformable tubes;

Figure 7 is a diagrammatical view showing a permanently deformable tube according to the invention, when
laid down.

Equal or similar parts will be designated by the
same references throughout the following description and
drawings.

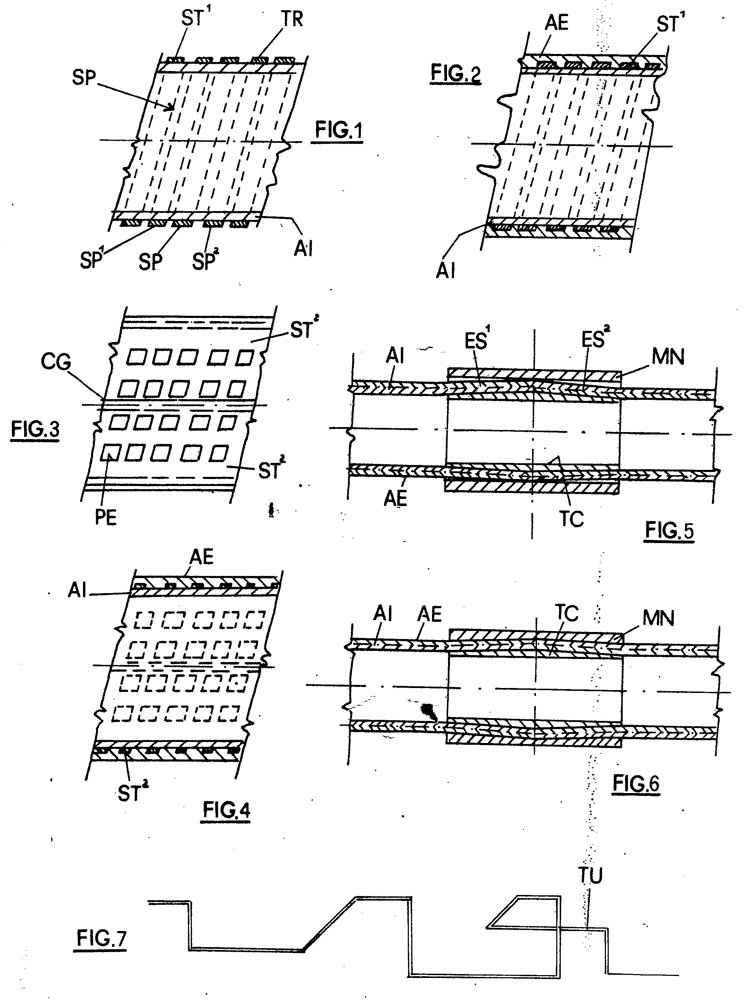

With reference in particular to figures 1 and 2
AI shows an inner core of a permanently deformable tube,
said inner core consisting of a hollow cylindrical extruded body in a thermoplastic material, which is preferably
resistant to corrosion. As a not restrictive example, the product known under the trade name RILSAN (trade mark)
may be used. The outer surface of said inner core may
be knurled, i.e. may be provided with longitudinal
knurls (not shown).

According to this invention a method of manufacturing is provided for, wherein, after the extrusion
step of said inner core AI, the same inner core is covered by means of a strip (f.i. a strap) $ST^1$ of alumi-
nium, the thickness and width of said strip being suitably chosen so to ensure the required permanent cold deformability. The adjacent turns SP1-SP2 are spaced apart
by an interspace TR for purposes that will appear later on.

After the winding operation, an outer core AE, is
extruded according to well known methods, the material
of the outer core being preferably the same product
(RILSAN) as that used for the inner core.

During said second core extrusion step, an autogenous sealing together of the two inner and outer cores
is obtained due to the provision of the interspace TR
as above described. As a result, the intermediate alumi-
nium core $ST^1$ is thoroughly fastened between the two
cores AI-AE. As previously stated, the thicknesses of

- 7 -

0053590

the inner and outer cores, the thickness of the aluminium strip, the winding pitch and the width of the wound strip, as well as the width of the interspace are parameters which depend on the permanent deformability degree the tube is required to provide for without incurring the risk of undue collapsing thereof and, therefore, without undesirable head losses therein.

As already mentioned hereinbefore, use of a wire instead of a strap could be made without departing from the scope of the invention.

Figure 4 shows the way in which the same result could be obtained, according to an alternative embodiment of the invention, by using an aluminium strip $\underline{ST}^2$ which can be bent so as to form a butt-joint $\underline{CG}$. In this case, however, the aluminium strip should be provided with perforations $\underline{PE}$ to allow the extruded material to pass through said perforations and thus achieve said autogenous sealing of the two cores through the longitudinally bent aluminium strip $\underline{ST}^2$.

With reference now to figure 5, there is shown the way in which tubes obtained by the method of the invention may be sealingly coupled together. The two ends

$ES^1ES^2$ of adjacent tubes are first engaged by a double truncated cone element TC made from the same material as the cores; then a sleeve MN (previously slipped over one tube) of the same core material is overled; finally, said outer sleeve MN is caused to melt, thereby obtaining an autogenous sealing of the two adjacent tube ends. Since the RILSAN product melts at about 210° C, no thermofusion problems should arise.

From the above, it clearly appears that the invention mainly relates in the coupling (sealing) of the outer core with the inner core during the extrusion of the outer core element and by exploiting passageways as provided for by the intermediate aluminium core.

The objects and advantages of the invention can be ready appreciated from the above description.

0053590

1. A method of manufacturing tubes with aluminium core and capable of permanent, reversible cold deformation, characterized in that, after the extrusion of a first tube core (inner core) a deformable aluminium core is wound therearound, and then a second tube outer core is extruded in such a way as to fasten said central aluminium core and to allow the material of said outer core to sealingly bond with that of the inner core through interspaces or openings provided for by said aluminium core.

2. A tube manufacturing method according to claim 1 characterized in that said interspaces are obtained by covering the surface of the inner core with winding turns between which an interspace is left to ensure a penetration of the extruded material to the inner core and thereby to achieve an autogenous sealing of said outer core with the inner one.

3. A tube manufacturing method according to claim 1, wherein a longitudinal strip is bent so as to form or not a butt-joint, the surface of said strip being formed with openings, such as holes and the like, which allow for the penetration of the extruded material to the inner core, thereby obtaining a sandwich-like fastening of said intermediate aluminium core.

4.      A tube as obtained by carrying out the method according to one or more of the preceding claims.

5.      A joint between the ends of two tubes as obtained by a method according to any preceding claim and characterized in that it comprises an inner double truncated cone sleeve forcedly mounted at the tube ends to be coupled, and an outer sleeve covering said tube ends to be jointed, said outer sleeve being able to be heat-sealed in order to achieve an autogenous union of said outer sleeve with the surfaces of said two tubes to be coupled.

FIG.1  FIG.2  FIG.3  FIG.4  FIG.5  FIG.6  FIG.7

0053590